# EUROPÄISCHE PATENTSCHRIFT

(11) **EP 2 936 646 B1**
(45) Veröffentlichungstag und Bekanntmachung des Hinweises auf die Patenterteilung: **20.04.2016**
(21) Anmeldenummer: 13811477.2
(22) Anmeldetag: 18.12.2013
(51) Int. Cl.: H02J 3/38

(54) **NETZERSATZANLAGE UND VERFAHREN ZUM TRENNEN EINES LOKALEN ENERGIEVERTEILUNGSNETZES VON EINEM ÜBERGEORDNETEN ENERGIEVERSORGUNGSNETZ**
BACKUP POWER SYSTEM AND METHOD FOR SEPARATING A LOCAL POWER GRID FROM AN UTILITY GRID
SYSTÈME ET PROCÉDÉ POUR SÉPARER UNE ALIMENTATION ÉLECTRIQUE LOCALE D'UN RÉSEAU ÉLECTRIQUE

(30) Priorität: 21.12.2012 DE 102012113016
(43) Veröffentlichungstag der Anmeldung: 28.10.2015
(73) Patentinhaber: SMA Solar Technology AG, 34266 Niestetal (DE)
(72) Erfinder: ALLERT, Claus, 34260 Kaufungen (DE)
(86) Internationale Anmeldenummer: PCT/EP2013/077101
(87) Internationale Veröffentlichungsnummer: WO 2014/096009

(56) Entgegenhaltungen:
- EP-A1- 1 965 483
- DE-A1-102011 000 394

## Beschreibung

Die Erfindung betrifft eine Netzersatzanlage zur Verbindung mit einem übergeordneten Energieversorgungsnetz und einem lokalen Energieverteilungsnetz. Die Netzersatzanlage weist eine Netztrenneinrichtung zur Verbindung bzw. Trennung des lokalen Energieverteilungsnetzes mit bzw. von dem übergeordneten Energieversorgungsnetz durch mindestens zwei in Reihe geschaltete Schaltorgane mit jeweils zugeordneten Schaltkontakten. Die Netzersatzanlage weist weiterhin eine lokale Energieversorgungseinrichtung mit einem Inselnetzdetektor zur Erkennung einer Inselsituation des lokalen Energieverteilungsnetzes auf. Die Erfindung betrifft weiterhin ein Verfahren zum Trennen eines lokalen Energieverteilungsnetzes von einem übergeordneten Energieversorgungsnetz.

Netzersatzanlagen dienen der Bereitstellung von elektrischer Energie für eine Verbraucheranordnung in einem lokalen Energieverteilungsnetz für den Fall, dass das übergeordnete, ggf. öffentliche Energieversorgungsnetz diese Energie nicht bereitstellen kann. Gründe dafür können beispielsweise ein Ausfall und/oder eine Störung des übergeordneten Energieversorgungsnetzes sein. Die Netzersatzanlage weist dazu die obengenannte Trenneinrichtung auf, die im Normalbetrieb des übergeordneten Energieversorgungsnetzes dieses mit dem lokalen Energieverteilungsnetz verbindet und bei Ausfall und/oder Störung des übergeordneten Energieversorgungsnetzes das lokale Energieverteilungsnetz von dem übergeordneten Energieversorgungsnetz trennt. Nach Abtrennen des lokalen Energieverteilungsnetzes schaltet sich die lokale Energieversorgungseinrichtung auf dieses lokale Netz auf, um die Verbraucheranordnung weiter mit Strom versorgen zu können. Die lokale Energieerzeugungseinrichtung ist dabei insbesondere ein Wechselrichter, der mit einem Energiespeicher, zum Beispiel einer Batterie, gekoppelt ist. Derartige Netzersatzanlagen zum Umschalten von einem Normalbetrieb bei Versorgung über das übergeordnete Energieversorgungsnetz auf einen Inselbetrieb bei Versorgung durch den lokalen Energieerzeuger sind beispielsweise aus der Druckschrift DE 20 2010 008 123 U1 bekannt.

Derartige lokale Energieversorgungseinrichtungen weisen dabei üblicherweise einen Inselnetzdetektor auf, um die Inselsituation des lokalen Energieverteilungsnetzes zu erkennen und oben beschriebene Schritte auszuführen. Verfahren zur Detektion einer solchen Inselsituation ("Anti-Islanding-Detection", AID) sind bekannt, beispielsweise aus den Druckschriften EP 2 003 759 A1 und EP0810713B1.

Bei derartigen Netzersatzanlagen ist aus Sicherheitsgründen eine Situation zu vermeiden, in der die lokale Energieversorgungseinrichtung das lokale Energieverteilungsnetz mit Energie versorgt, während dieses noch mit dem übergeordneten Energieversorgungsnetz verbunden ist. In einer solchen Situation wäre beispielsweise die Sicherheit von Personen, die Wartungsarbeiten an dem eigentlich spannungsfreien übergeordneten Energieversorgungsnetz durchführen, nicht mehr gewährleistet. Daher ist üblicherweise vorgesehen, als Schaltorgan in der Netztrennanlage sogenannte Schütze mit Zwangsführung und Rückmeldekontakt vorzusehen. Bei diesen Schützen ist gewährleistet, dass der Rückmeldekontakt dann und nur dann geschlossen ist, wenn alle Hauptkontakte tatsächlich getrennt sind. Der Rückmeldekontakt ist dann mit der lokalen Energieversorgungseinrichtung verbunden, wobei diese nur bei geschlossenem Rückmeldekontakt das lokale Energieversorgungsnetz mit Energie versorgt. Zudem werden häufig zwei in Reihe geschaltete Schütze vorgesehen, um durch Redundanz für zusätzliche Sicherheit zu sorgen. Verglichen mit herkömmlichen, nicht mit einer Zwangsführung versehenen Schützen, die auch unter der Bezeichnung "Installationsschütze" bekannt sind, sind die genannten Schütze mit Zwangsführung zum einen hochpreisiger und zum anderen von ihrer Baugröße her nicht mit üblichen in der Hausinstallation verwendeten Installationskästen ("Sicherungskasten", "Hausunterverteilung") verwendbar.

Es ist daher eine Aufgabe der vorliegenden Erfindung, eine Netzersatzanlage bereitzustellen, die auch ohne Schaltorgane mit Zwangsführung und Rückmeldekontakt gewährleistet, dass das lokale Energieverteilungsnetz mit der von den einschlägigen Vorschriften geforderten Sicherheit von dem übergeordneten Energieversorgungsnetz getrennt ist, bevor eine Energieversorgung des lokalen Netzes durch die lokale Energieversorgungseinrichtung stattfinden kann.

Diese Aufgabe wird gelöst durch eine Netzersatzanlage bzw. ein Verfahren zum Trennen eines lokalen Energieverteilungsnetzes von einem übergeordneten Energieversorgungsnetz mit den jeweiligen Merkmalen der unabhängigen Ansprüche. Vorteilhafte Ausgestaltungen und Weiterbildungen sind in den abhängigen Ansprüchen angegeben.

Eine erfindungsgemäße Netzersatzanlage der eingangs genannten Art zeichnet sich dadurch aus, dass ein erstes der beiden Schaltorgane der Netztrenneinrichtung zu seiner Ansteuerung unmittelbar mit dem übergeordneten Energieversorgungsnetz verbunden ist und das zweite der beiden Schaltorgane der Netztrenneinrichtung zu seiner Ansteuerung mit der lokalen Energieversorgungseinrichtung verbunden ist.

Durch die unmittelbare Verbindung der Ansteuerung des ersten Schaltorgans mit dem übergeordneten Energieversorgungsnetz öffnet dieses wenn im übergeordneten Energieversorgungsnetz die Spannung (Haltespannung) nicht mehr zum Ansteuern des Schaltorgans ausreicht, d.h. wenn das übergeordnete Energieversorgungsnetz ausfällt. In diesem Augenblick ist bereits eine Trennung der beiden Netze gegeben. Das zweite der beiden Schaltorgane wird durch die lokale Energieversorgungseinrichtung angesteuert, die über den Inselnetzdetektor eine Inselnetzsituation erkennt und entsprechend das zweite Schaltorgan - völlig unabhängig von der korrekten Funktion des ersten Schaltorgans - ebenfalls sicher öffnen kann. Somit ist in Bezug auf das erste Schaltorgan die oft von Netzbetreibern geforderte "ein-Fehler-Sicherheit" gewährleistet, ohne auf zwangsgeführte Schütze zurückgreifen zu müssen.

Bei einem erfindungsgemäßen Verfahren zum Trennen eines lokalen Energieverteilungsnetzes von einem übergeordneten Energieversorgungsnetz sind die beiden genannten Netze durch eine Netztrenneinrichtung verbunden, die mindestens zwei in Reihe geschaltete Schaltorgane mit jeweils zugeordneten Schaltkontakten umfasst. Dabei ist ein erstes der Schaltorgane zu seiner Ansteuerung unmittelbar mit dem übergeordneten Energieversorgungsnetz verbunden. Im lokalen Energieverteilungsnetz ist zumindest eine lokale Energieversorgungseinrichtung vorhanden, die einen Inselnetzdetektor zur Erkennung einer Inselsituation des lokalen Energieverteilungsnetzes sowie ein internes Schaltorgan zur Trennung der lokalen Energieversorgungseinrichtung vom lokalen Energieverteilungsnetz umfasst. Weiter ist ein Steuerkontakt vorgesehen, über den das zweite Schaltorgan zu seiner Ansteuerung mit dem übergeordneten Energieversorgungsnetz verbunden ist. Bei dem Verfahren wird das lokale Energieverteilungsnetz auf das Vorliegen einer Inselsituation durch den Inselnetzdetektor überwacht. Wird eine Inselsituation erkannt, werden die Schaltkontakte des zweiten Schaltorgans durch Öffnen der Steuerkontakte geöffnet und die lokale Energieversorgungseinrichtung wird von dem lokalen Energieverteilungsnetz durch das interne Schaltorgan getrennt, um die Schaltkontakte des ersten Schaltorgans zu öffnen.

Das Verfahren gewährleistet auf diese Weise die "ein-Fehler-Sicherheit" bezüglich des zweiten Schaltorgans. Sollte die Trennung vom übergeordneten Energieversorgungsnetz durch das zweite Schaltorgan fehlschlagen, muss gewährleistet werden, dass das erste Schaltorgan sicher öffnet. Dazu darf die lokale Energieversorgungseinrichtung nicht in das lokale Netz einspeisen, um keine Haltespannung für das erste Schaltorgan zu generieren und trennt sich dazu vom lokalen Energieverteilungsnetz.

Idealerweise überwacht die lokale Energieversorgungseinrichtung, dass die Spannung im lokalen Energieverteilungsnetz kurzzeitig zusammenbricht, um sicherzustellen, dass auch eventuell vorhandene weitere Energieeinspeiser, z.B. PV-Generatoren mit den zugehörigen Wechselrichtern, sich vom lokalen Energieverteilungsnetz getrennt haben. So ist gewährleistet, dass das erste Schaltorgan keine Haltespannung mehr bekommt und so wird - auch bei fehlerhaftem Verhalten des zweiten Schaltorgans - eine sichere Trennung des lokalen Energieverteilungsnetz vom übergeordneten Energieversorgungsnetz realisiert .

Die Erfindung wird nachfolgend anhand von einem Ausführungsbeispiel mithilfe von drei Figuren näher erläutert. Die Figuren zeigen:
- Fig. 1: Ein Ausschnitt eines übergeordneten Energieversorgungsnetzes, an das ein lokales Energieverteilungsnetz über eine Netzersatzanlage angeschlossen ist;
- Fig. 2: eine detaillierte schematische Darstellung der Netzersatzanlage aus Fig. 1 und
- Fig. 3: eine schematische Darstellung einer Trenneinrichtung für eine Netzersatzanlage.

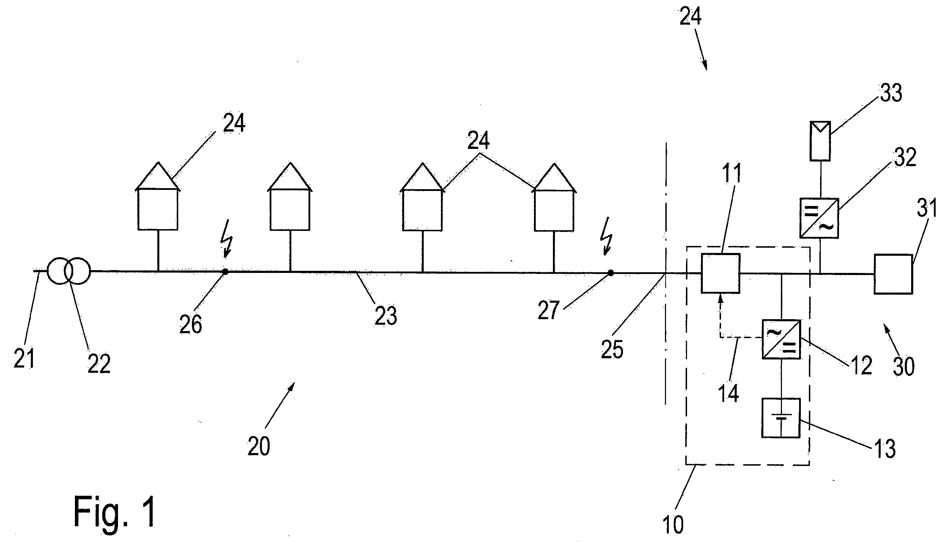

Fig. 1 zeigt schematisch in einer Übersichtsdarstellung eine Netzersatzanlage 10, die zum einen mit einem übergeordneten Energieversorgungsnetz 20 und zum anderen mit einem lokalen Energieverteilungsnetz 30, an das u.a. Verbraucher 31 angeschlossen sind, verbunden ist.

Von dem übergeordneten Energieversorgungsnetz 20 ist lediglich ein Abschnitt, ein sogenanntes Ortsnetz 23 wiedergegeben. Das Ortsnetz 23 wird über einen Mittelspannungsanschluss 21 und einem Ortsnetztransformator 22 übergeordnet mit Energie versorgt. Am Ortsnetz 23 sind mehrere Hausinstallationen 24 angeschlossen.

Im rechten Teil der Fig. 1 ist eine der Hausinstallationen 24 ausgehend von einem Hausübergabepunkt 25 detaillierter dargestellt. Diese Hausinstallation 24 umfasst die Netzersatzanlage 10 und das lokale Energieverteilungsnetz 30. Die Netzersatzanlage10 weist dabei eine Netztrenneinrichtung 11 und eine lokale Energieversorgungseinrichtung 12 auf, hier beispielhaft ein Batteriewechselrichter mit angeschlossener Batterie 13 als Energiespeicher auf. Von der lokalen Energieversorgungseinrichtung 12 wird über eine Steuerleitung 14 die Netztrenneinrichtung 11 angesteuert. In dem lokalen Energieverteilungsnetz 30 ist neben den bereits genannten Verbrauchern 31 weiter ein Photovoltaik (PV)-Wechselrichter 32 mit zugeordnetem PV-Generator 33 vorgesehen. Der PV-Wechselrichter steht hier beispielhaft für lokale Energieeinspeiser bzw. -erzeuger, die in ein bestehendes Energienetz einspeisen, nicht aber selbständig ein Netz aufbauen können. Die Einbindung beliebiger anderer Energiequellen ist möglich.

In der Fig. 1 sind beispielhaft zwei innerhalb des Ortsnetzes 23 mögliche Netzfehlersituationen dargestellt. Beide Situationen betreffen einen Netzausfall aufgrund einer Trennung der Ortsnetzleitung. Eine solche Trennung kann beispielsweise versehentlich durch Bauarbeiten aufgrund eines Durchtrennens des Ortsnetzkabels oder im Zuge von Wartungsarbeiten auftreten. Im Hinblick auf den Hausübergabepunkt 25 ist der Ort eines ersten dargestellten Netzfehlers 26 relativ weit entfernt gegenüber einem zweiten dargestellten Netzfehler 27, der unmittelbarer räumlicher Nähe zum Hausübergabepunkt 25 auftritt. Der erste Netzfehler 26 wird daher auch als entfernter Netzfehler bezeichnet und entsprechend der zweite Netzfehler 27 als naher Netzfehler 27. Bei einem nahen Netzfehler 27 liegt vom Hausübergabepunkt 25 aus betrachtet eine hochohmige Trennung des übergeordneten Energieversorgungsnetzes 30 vor. Bei dem entfernten Netzfehler 26 sind vom Hausübergabepunkt 25 aus betrachtet hoch eine Reihe von Hausinstallationen 24 ebenfalls an dem abgetrennten Ortsnetzkabel angeschlossen. Vom Hausübergabepunkt 25 aus betrachtet ist der entfernte Netzfehler 26 aufgrund einer wahrscheinlich großen Zahl von Verbrauchern innerhalb der Hausinstallation 24 niederohmig oder kommt einem kurzgeschlossenen Ortsnetzkabel gleich.

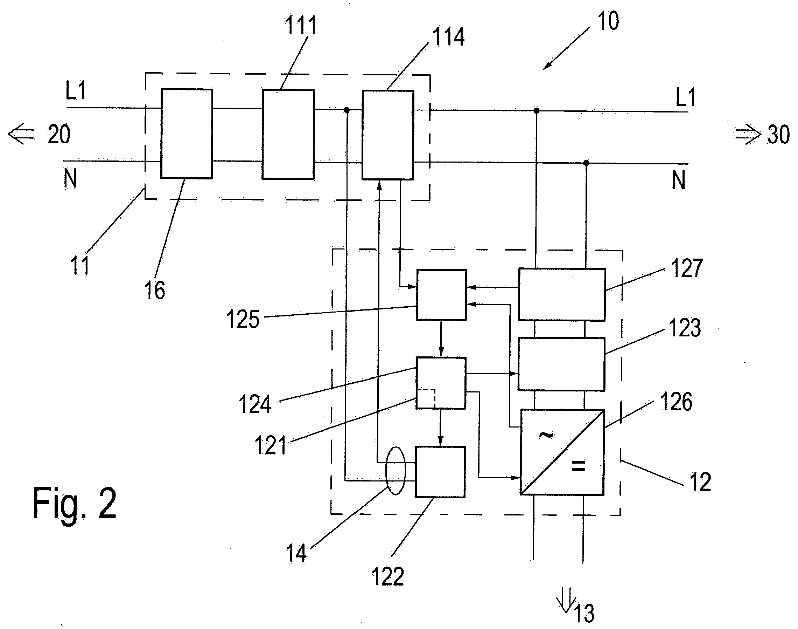

Fig. 2 zeigt in einem Blockschaltbild den Aufbau der Netzersatzanlage 10 detaillierter. Die Netzersatzanlage 10 ist zum einen mit dem übergeordneten Energieversorgungsnetz 20 und zum anderen mit dem lokalen Energieverteilungsnetz 30 verbunden. In der Fig. 2 sind beispielhaft hier nur je zwei Verbindungsleitungen, ein Nullleiter N und ein Phasenleiter L1 dargestellt. Es versteht sich, dass auch eine dreiphasige Verbindung mit einem Nullleiter N und drei separaten Phasenleitungen L1 bis L3 sowie gegebenenfalls einem Erdungsanschluss vorgesehen sein können. In der Verbindung zwischen dem übergeordneten Energieversorgungsnetz 20 und dem lokalen Energieverteilungsnetz 30 im Bereich einer Netztrenneinrichtung 11 ein erstes Schaltorgan 111 und ein zweites Schaltorgan 114 sind in Reihe geschaltet angeordnet. Beide Schaltorgane sind in der Lage, über hier nicht dargestellte Schaltkontakte die beiden Netze 20, 30 allpolig zu trennen. Ferner ist eine Netzüberwachungseinheit 16 für das übergeordnete Energieversorgungsnetz 20 vorgesehen, die bei Ausfall des übergeordneten Energieversorgungsnetzes 20 nach erfolgter Trennung des lokalen Energieverteilungsnetzes 30 und des übergeordneten Energieversorgungsnetzes 20 weiter das übergeordnete Energieversorgungsnetz 20 überwacht. Bei Wiederkehr des übergeordneten Energieversorgungsnetzes 20 wird dies durch die Netzüberwachungseinheit 16 an die lokale Energieversorgungseinrichtung 12 gemeldet, so dass nach erfolgter Synchronisation der Phasenlage in den beiden Netze 20, 30 diese wieder miteinander verbunden werden können.

Die lokale Energieversorgungseinrichtung 12 umfasst einen Wechselrichter 126, der mit der hier nicht dargestellten Batterie 13 verbunden ist. Wechselstromseitig ist dem Wechselrichter 126 ein internes Schaltorgan 123, beispielsweise ein Schütz, nachgeschaltet und eine Netzüberwachung 127 für das lokale Energieverteilungsnetz. Über das interne Schaltorgan 123 ist der Wechselrichter 126 wechselspannungsseitig mit dem lokalen Energieverteilungsnetz 30 verbunden. Diese Verbindung ist hier entsprechend der Ausgestaltung der Netze 20, 30 ebenfalls einphasig ausgeführt. Es versteht sich, dass bei mehrphasigen Netzen 20, 30 auch der Wechselrichter 126 und die Verbindung zum Ilokalen Energieverteilungsnetz 30 mehrphasig ausgeführt sein kann.

Die lokale Energieversorgungseinrichtung 12 umfasst weiterhin eine Datenerfassungseinrichtung 125, die mit einer Steuerung 124 verbunden ist. Die Datenerfassung 125 nimmt Informationen (Messwerte, Zustandsdaten) von dem Wechselrichter 126, der Netzüberwachung 127 und ggf. von einem Rückmeldekontakt des zweiten Schaltorgans 114 auf und stellt sie der Steuerung 124 zur Verfügung. In einer alternativen Ausgestaltung ist es möglich, dass die Datenerfassung 125 in die Steuerung 124 integriert ist. Die Steuerung 124 steuert die Funktionen der Netzersatzanlage 10, insbesondere den Wechselrichters 32 und die Schaltorgane 123, 122.

Als ein Teil der Steuerung 124 oder alternativ auch separat ausgeführt umfasst die lokale Energieversorgungseinrichtung zudem einen Inselnetzdetektor 121. Dieser steht datentechnisch mit der Netzüberwachung 127 des lokalen Energieversorgungsnetzes in Verbindung, welche die Netzbedingungen hinsichtlich der zulässigen Grenzen für Spannung und Frequenz zu überwacht. Diese Grenzen sind zum Teil national unterschiedlich vorgegeben.

Der Inselnetzdetektor 121 ist in der Lage, eine im lokalen Energieversorgungsnetz 30 vorliegende Inselnetzsituation zu erkennen. Zur Erkennung einer vorliegenden Inselnetzsituation wendet er bekannte Anti-Islanding-Detection (AID) Verfahren an, dazu erhält er die nötigen Messwerte (Spannung, Strom, Frequenz des angeschlossenen Netzes 30) von der Netzüberwachung 127 via Datenerfassung 125 und steuert gegebenenfalls für ein aktives AID-Verfahren den Wechselrichter 126 entsprechend an.

Der Inselnetzdetektor 121 ist so eingestellt, dass eine Inselnetzsituation sowohl erkannt wird, wenn ein naher Netzfehler 27 (vgl. Fig. 1) auftritt, als auch wenn ein entfernter Netzfehler 26 vorliegt. Die Detektion einer Inselnetzsituation wird an die Steuerung 124 weitergegeben, welche über einen Schaltkontakt 122 das zweite Schaltorgan 114 so ansteuert, dass dieses öffnet. Das erste Schaltorgan 111 wird unmittelbar über das übergeordnete Energieversorgungsnetz 20 angesteuert und öffnet, da ihm keine Haltespannung zur Verfügung steht.

Wenn in dem lokalen Energieverteilungsnetz 30 weitere lokale Energiequellen angeordnet sind, beispielsweise die in Fig. 1 dargestellten PV-Anlage mit PV-Wechselrichter 32 und PV-Generator 33, ist dafür zu sorgen, dass diese ebenfalls beim Vorliegen einer Inselnetzsituation abgeschaltet werden können. Dieses kann beispielsweise dadurch erfolgen, dass der PV-Wechselrichter 32 über eine zu dem Inselnetzdetektor 121 analoge Vorrichtung zur Detektion einer Inselnetzsituation verfügt. Alternativ ist es auch denkbar, dass der PV-Wechselrichter 32 über dem Inselnetzdetektor 121 der Netzersatzanlage 10 angesteuert wird.

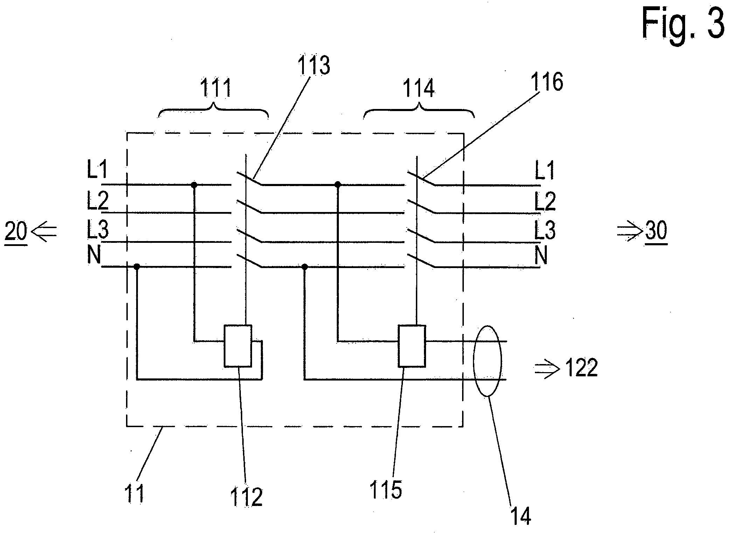

Fig. 3 zeigt den Aufbau einer Netztrenneinrichtung 11, wie sie beispielsweise in der Netzersatzanlage 10 der Fig. 2 verwendet werden kann, detaillierter.

Als Schaltorgane 111 und 114 werden hier Schütze ohne Zwangsführung, sogenannte Installationsschütze, verwendet. Hierdurch wird vorteilhaft erreicht, dass sich die gesamte Netztrenneinrichtung 11 in herkömmlichen "Hausunterverteilungen" ("Sicherungskästen") integrieren lässt, ohne auf Sicherheitsstandards zu verzichten.

In Fig. 3 sind die Netze 20, 30 dreiphasig ausgeführt. Die Schaltorgane 111, 114 weisen entsprechend je vier Schaltkontakte 113, 116 auf. Jedes der Schaltorgane 111, 114 trennt somit die Verbindung zwischen den Netzen 20, 30 allpolig. Die Schaltkontakte der beiden Schaltorgane 111, 114 sind für jede der Leitungen in Reihe geschaltet.

Die Schaltorgane 111, 114 weisen Steuerspulen 112, 115 auf. Die Steuerspule 112 des ersten Schaltorgans 111 ist unmittelbar an das übergeordnete Energieversorgungsnetz 20 angeschlossen. Die Steuerspule 115 des zweiten Schaltorgans 114 greift ihre Versorgungsspannung zwischen den Schaltkontakten 113 bzw. 116 des ersten bzw. zweiten Schaltorgans 111, 114 ab, wobei diese über die Steuerleitung 14 über den Schaltkontakt 122 in der lokalen Energieversorgungseinrichtung 12 geführt sind. Bei beiden Schaltorganen handelt es sich um sogenannte "Schließer", d.h. liegt an der Steuerspule des Schaltorganes keine ausreichend große Spannung (Haltespannung) an, sind die Schaltkontakte geöffnet ("normally open").

Optional kann das zweite Schaltorgan 114 mit einem Rückmeldekontakt (nicht gezeigt) ausgestattet sein, der von der Datenerfassung 125 erfasst wird, wobei dann vorgesehen ist, dass interne Schaltorgan 123, über das der Wechselrichter 126 auf das lokale Energieverteilungsnetz 30 aufgeschaltet wird, nur dann einzuschalten, wenn der Rückmeldekontakt eine Nichtbetätigung des Schaltorgans 114 meldet. Dieses ist eine zusätzliche Sicherheitsmaßnahme.

Auch wenn gemäß der Ausführung in Fig. 3 Schaltorgane 111, 114 verwendet werden, die nicht über eine Zwangsführung verfügen, ist die dargestellte Netzersatzanlage 10 im Hinblick auf die Funktionsweise der Schaltorgane 111, 114 "ein-Fehler sicher".

Wenn einer oder mehrere der Schaltkontakte 113 des ersten Schaltorgans 111 beispielsweise verschweißt sind und nicht ordnungsgemäß öffnen, öffnet dennoch das Schaltorgan 114 durch die Ansteuerung über den Steuerkontakt 122 der lokalen Energieversorgungseinrichtung 12 nach Erkennen einer Inselnetzsituation. Sind dagegen einer oder mehrere der Schaltkontakte 116 des zweiten Schaltorgans 114 verschweißt und öffnen nicht korrekt, öffnet das Schaltorgan 111, da aufgrund des Ausfalls des übergeordneten Energieversorgungsnetzes 20 der Steuerspule 112 keine Haltespannung zu Verfügung steht.

Bei einem nahen Netzfehler 27 (vgl. Fig. 1) kann ein Fall auftreten, bei dem sich bei der lokalen Energieversorgungsnetz 30 bei aufgeschalteter lokaler Energieversorgungseinrichtung 12 - plus eventuell weiterer Energieerzeuger - lokal Erzeugung und Verbrauch (durch die Verbraucher 31) zumindest kurzzeitig ausgleichen. So kann die Situation eintreten, dass bei fehlerhafter Funktion des zweiten Schaltorganes 114 das erste Schaltorgan 111 nicht öffnet, obwohl das übergeordneten Energieversorgungsnetz 20 ausfällt, da die lokale Energieversorgungseinrichtung 12 die Haltespannung für die Steuerspulen 112 generiert. Für diesen Fall wird die lokale Energieversorgungseinrichtung 12 durch das interne Schaltorgan 123 von dem lokalen Energieverteilungsnetz 30 getrennt, um sicher dem ersten Schaltorgan 111 die Haltespannung zu entziehen.

In dem Fall, dass weitere lokale Energieerzeuger in dem lokalen Energieverteilungsnetz 30 vorhanden sind, kann die lokale Energieversorgungseinrichtung 12 mittels ihrer Netzüberwachung 127 einen Zusammenbruch der Spannung des lokalen Energieversorgungsnetzes 30 ermitteln und so sicherstellen, dass das ersten Schaltorgan 111 öffnet. Zusätzlich wird mit dieser Maßnahme auch eine fehlerhafte Funktion der Steuerkontakte 122 abgefangen. Sollten diese trotz Ansteuerung durch die Energieversorgungseinrichtung nicht öffnen, wird durch den kontrollierten Spannungseinbruch gewährleistet, dass das zweite Schaltorgan 114 öffnet. Die Anbindung der Ansteuerung an das übergeordnete Energieversorgungsnetz führt zusätzlich dazu, dass das zweite Schaltorgan erst bei Wiederkehr des übergeordneten Energieversorgungsnetzes wieder eingeschaltet werden kann.

Nach erfolgter Trennung des lokalen Energieverteilungsnetzes 30 vom übergeordneten Energieversorgungsnetz 20 kann sich die lokale Energieversorgungseinrichtung 12 mittels ihres internen Schaltorgans 123 wieder zuschalten und eine lokale Spannungsversorgung aufbauen. Das lokal wiederhergestellte Netz 30 wird auch von den lokalen Energieerzeugern 32 erkannt, so dass diese ebenfalls wieder zuschalten und ins lokale Energieverteilungsnetz 30 einspeisen. Mittels Netzüberwachung des übergeordneten Energieversorgungsnetzes 16 (Fig. 2) wird die Rückkehr der übergeordneten Energieversorgung überwacht, so dass - nach einer Synchronisation des lokalen Energieverteilungsnetzes 30 auf das übergeordnetes Energieversorgungsnetzes 20 hinsichtlich Spannung und Frequenz- die beiden Netze 20, 30 wieder miteinander verbunden werden können.

### Bezugszeichenliste

- 10: Netzersatzanlage
- 11: Netztrenneinrichtung
- 111: erstes Schaltorgan
- 112: erste Steuerspule
- 113: erste Schaltkontakte
- 114: zweites Schaltorgan
- 115: zweite Steuerspule
- 116: zweite Schaltkontakte
- 117: Rückmeldekontakt
- 12: lokale Energieversorgungseinrichtung
- 121: Inselnetzdetektor
- 122: Steuerkontakt
- 123: internes Schaltorgan
- 124: Steuerung
- 125: Datenerfassung
- 126: Wechselrichter
- 127: Netzüberwachung des lokales Energieverteilungsnetzes

- 13: Batterie
- 14: Steuerleitung
- 16: Netzüberwachung des übergeordneten Energieversorgungsnetzes
- 20: übergeordnetes Energieversorgungsnetz
- 21: Mittelspannungsanschluss
- 22: Ortsnetztransformator
- 23: Ortsnetz
- 24: Hausinstallationen
- 25: Hausübergabepunkt
- 26: entfernter Netzfehler
- 27: naher Netzfehler

- 30: lokales Energieverteilungsnetz
- 31: Verbraucher
- 32: PV-Wechselrichter
- 33: PV-Generator

## Patentansprüche

1. Netzersatzanlage (10) zur Verbindung mit einem übergeordneten Energieversorgungsnetz (20) und einem lokalen Energieverteilungsnetz (30), aufweisend
- eine Netztrenneinrichtung (11) zur Verbindung des lokalen Energieverteilungsnetzes (30) mit dem übergeordneten Energieversorgungsnetz (20) durch mindestens zwei in Reihe geschaltete Schaltorgane (111, 114) mit jeweils zugeordneten Schaltkontakte (113, 116) und
- eine lokale Energieversorgungseinrichtung (12) mit einem Inselnetzdetektor (121) zur Erkennung einer Inselsituation des lokalen Energieverteilungsnetzes (30),
**dadurch gekennzeichnet, dass**
- ein erstes der beiden Schaltorgane (111) zu seiner Ansteuerung unmittelbar mit dem übergeordneten Energieversorgungsnetz (20) verbunden ist und
- das zweite der beiden Schaltorgane (114) zu seiner Ansteuerung mit der lokalen Energieversorgungseinrichtung (12) verbunden ist.

2. Netzersatzanlage (10) nach Anspruch 1, bei der die lokale Energieversorgungseinrichtung (12) Steuerkontakte (122) aufweist, durch die das zweite Schaltorgan (114) zu seiner Ansteuerung mit dem übergeordneten Energieversorgungsnetz (20) verbunden wird.

3. Netzersatzanlage (10) nach Anspruch 1, bei der das zweite Schaltorgan (114) derart angesteuert wird, dass seine zugehörigen Schaltkontakte (116) öffnen, wenn eine Inselsituation vorliegt.

4. Netzersatzanlage (10) nach einem der Ansprüche 1 bis 3, bei der die beiden Schaltorgane (111, 114) der Netztrenneinrichtung (11) Installationsschütze ohne Zwangsführung sind.

5. Netzersatzanlage (10) nach einem der Ansprüche 1 bis 4, bei der das zweite Schaltorgan (114) mindestens einen Rückmeldekontakt (117) aufweist, der ein Öffnen der zu dem zweiten Schaltorgan (114) gehörigen Schaltkontakte (116) anzeigt.

6. Netzersatzanlage (10) nach Anspruch 5, bei der die Rückmeldekontakt (117) mit der lokalen Energieversorgungseinrichtung (12) verbunden ist und ein Aufbau einer lokalen Energieversorgung durch die lokale Energieversorgungseinrichtung (12) solange verhindert wird, bis der Rückmeldekontakt (117) das Öffnen der Schaltkontakte (116) anzeigt.

7. Netzersatzanlage 10 nach einem der Ansprüche 1 bis 6, bei der die Trenneinrichtung (11) in eine Hausunterverteilung integriert ist.

8. Verfahren zum Trennen eines lokalen Energieverteilungsnetzes (30) von einem übergeordneten Energieversorgungsnetz (20), wobei
- die beiden Netze (30, 20) durch eine Netztrenneinrichtung (11) umfassend mindestens zwei in Reihe geschaltete Schaltorganen (111, 114) mit jeweils zugeordneten Schaltkontakten (113, 116) verbunden sind, wobei ein erstes der Schaltorgane (111) zu seiner Ansteuerung unmittelbar mit dem übergeordneten Energieversorgungsnetz (20) verbunden ist und
- im lokalen Energieversorgungsnetz (30) zumindest eine lokale Energieversorgungseinrichtung (12) vorhanden ist, umfassend einen Inselnetzdetektor (121) zur Erkennung einer Inselsituation des lokalen Energieverteilungsnetzes (30), ein internes Schaltorgan (123) zur Trennung der lokale Energieversorgungseinrichtung (12) vom lokalen Energieverteilungsnetz (30), Steuerkontakte (122) durch die das zweite Schaltorgan (114) zu seiner Ansteuerung mit dem übergeordneten Energieversorgungsnetz (20) verbunden ist,
mit den folgenden Schritten:
- Überwachen des lokalen Energieverteilungsnetzes (30) auf das Vorliegen einer Inselsituation durch den Inselnetzdetektor (121);
- Öffnen der Schaltkontakte (116) des zweiten Schaltorgans (114) durch Öffnen der Steuerkontakte (122) und
- Trennen der lokalen Energieversorgungseinrichtung (12) von dem lokalen Energieverteilungsnetz (30) durch das interne Schaltorgan (123) zum Öffnen der Schaltkontakte (113) des ersten Schaltorgans (111).

9. Verfahren zum Trennen nach Anspruch 8, wobei
- das lokale Energieversorgungsnetz (30) mindestens einen lokalen Energieerzeuger enthält, insbesondere PV-Wechselrichter (32) mit an diese angeschlossenen PV-Generatoren (33), und
- die lokale Energieversorgungseinrichtung (12) durch die Netzüberwachung des lokalen Energieverteilungsnetzes (127) einen Zusammenbruch der Spannung des lokalen Energieverteilungsnetzes (30) ermittelt,
- bei nicht vollständigen Zusammenbruch wartet, bis sich alle lokalen Energieerzeuger vom lokalen Energieversorgungsnetz (30) getrennt haben;
- nach dem vollständigen Zusammenbruch der Spannung des lokalen Energieversorgungsnetzes (30) die lokale Energieversorgungseinrichtung (12) die Trennung von dem lokalen Energieverteilungsnetz (30) durch das interne Schaltorgan (123) aufhebt und
- im lokalen Energieverteilungsnetz (30) eine eigenständige lokale Energieversorgung aufbaut.

## Claims

1. A standby power supply system (10) for connection to a superordinate power supply grid (20) and a local power distribution grid (30), comprising
- a grid disconnection device (11) for connecting the local power distribution grid (30) to the superordinate power supply grid (20) by at least two series-connected switching elements (111, 114), each comprising assigned switching contacts (113, 116), and
- a local power supply device (12) comprising an island detector (121) for detecting an island situation of the local power distribution grid (30),
**characterized in that**
- a first of the two switching elements (111), for actuation thereof, is connected directly to the superordinate power supply grid (20), and
- the second of the two switching elements (114), for actuation thereof, is connected to the local power supply device (12).

2. The standby power supply system (10) as claimed in claim 1, wherein the local power supply device (12) has control contacts (122), by means of which the second switching element (114), for actuation thereof, is connected to the superordinate power supply grid (20).

3. The standby power supply system (10) as claimed in claim 1, wherein the second switching element (114) is actuated in such a way that its associated switching contacts (116) open when there is an island situation.

4. The standby power supply system (10) as claimed in one of claims 1 to 3, wherein the two switching elements (111, 114) of the grid disconnection device (11) are installation contactors without priority control.

5. The standby power supply system (10) as claimed in one of claims 1 to 4, wherein the second switching element (114) has at least one checkback contact (117), which indicates an opening of the switching contacts (116) belonging to the second switching element (116).

6. The standby power supply system (10) as claimed in claim 5, wherein the checkback contact (117) is connected to the local power supply device (12), and a buildup of a local power supply by the local power supply device (12) is prevented until the checkback contact (117) indicates opening of the switching contacts (116).

7. The standby power supply system (10) as claimed in one of claims 1 to 6, wherein the disconnection device (11) is integrated in a domestic subdistribution system.

8. A method for disconnecting a local power distribution grid (30) from a superordinate power supply grid (20), wherein
- the two grids (30, 20) are connected by a grid disconnection device (11) comprising at least two series-connected switching elements (111, 114), each having assigned switching contacts (113, 116), wherein a first of the switching elements (111), for actuation thereof, is connected directly to the superordinate power supply grid (20), and
- at least one local power supply device (12) is provided in the local power supply grid (30), said local power supply device comprising an island detector (121) for detecting an island situation of the local power distribution grid (30), an internal switching element (123) for disconnecting the local power supply device (12) from the local power distribution grid (30), control contacts (122) by means of which the second switching element (114), for actuation thereof, is connected to the superordinate power supply grid (20),
comprising the following steps:
- monitoring the local power distribution grid (30) for the presence of an island situation by means of the island detector (121);
- opening the switching contacts (116) of the second switching element (114) by opening the control contacts (122), and
- disconnecting the local power supply device (12) from the local power distribution grid (30) by means of the internal switching element (123) for opening the switching contacts (113) of the first switching element (111).

9. The disconnection method as claimed in claim 8, wherein
- the local power supply grid (30) comprises at least one local power generating unit, in particular a PV inverter (32) comprising PV generators (33) connected thereto, and
- the local power supply device (12), by means of the grid monitoring of the local power distribution grid (127), determines a voltage failure of the local power distribution grid (30),
- in the event of incomplete collapse, wait until all of the local power generating units have been disconnected from the local power supply grid (30);
- after complete voltage collapse of the local power supply grid (30), the local power supply device (12) cancels the disconnection from the local power distribution grid (30) by the internal switching element (123), and
- builds up an independent local power supply in the local power distribution grid (30).

## Revendications

1. Système de réseau secouru (10), destiné à être connecté à un réseau d'alimentation en énergie supérieur (20) et à un réseau de distribution d'énergie local (30), comprenant
- un dispositif de séparation de réseau (11) destiné à connecter le réseau de distribution d'énergie local (30) au réseau d'alimentation en énergie supérieur (20) par l'intermédiaire d'au moins deux organes de commutation connectés en série (111, 114) ayant des contact de commutation respectifs associés (113, 116), et
- un dispositif d'alimentation en énergie local (12) comportant un détecteur de réseau isolé (121) destiné à identifier une situation d'isolation du réseau de distribution d'énergie local (30),
**caractérisé en ce que**
- un premier des deux organes de commutation (111) est directement connecté, pour le commander, au réseau d'alimentation en énergie supérieur (20), et
- le second des deux organes de commutation (114) est connecté, pour le commander, au dispositif d'alimentation en énergie local (12).

2. Système de réseau secouru (10) selon la revendication 1, dans lequel le dispositif d'alimentation en énergie local (12) comprend des contacts de commande (122) par l'intermédiaire desquels le second organe de commutation (114), pour le commander, est connecté au réseau d'alimentation en énergie supérieur (20).

3. Système de réseau secouru (10) selon la revendication 1, dans lequel le second organe de commutation (114) est commandé de manière à ce que les contacts de commutation qui lui sont associés (116) s'ouvrent en présence d'une situation d'isolation.

4. Système de réseau secouru (10) selon l'une quelconque des revendications 1 à 3, dans lequel les deux organes de commutation (111, 114) du dispositif de séparation de réseau (11) sont des contacteurs d'installation sans guidage forcé.

5. Système de réseau secouru (10) selon l'une quelconque des revendications 1 à 4, dans lequel le second organe de commutation (114) comprend au moins un contact de retour d'informations (117) qui indique une ouverture des contacts de commutation (116) associés au second organe de commutation (114).

6. Système de réseau secouru (10) selon la revendication 5, dans lequel le contact de retour d'informations (117) est connecté au dispositif d'alimentation en énergie local (12) et un établissement d'une alimentation en énergie locale par le dispositif d'alimentation en énergie local (12) est empêché jusqu'à ce que le contact de retour d'informations (117) indique l'ouverture des contacts de commutation (116).

7. Système de réseau secouru (10) selon l'une quelconque des revendications 1 à 6, dans lequel le dispositif de séparation (11) est intégré à une sous-distribution domestique.

8. Procédé de séparation d'un réseau de distribution d'énergie local (30) d'un réseau d'alimentation en énergie supérieur (20), dans lequel
- les deux réseaux (30, 20) sont connectés par l'intermédiaire d'un dispositif de séparation de réseau (11) comprenant au moins deux organes de commutation (111, 114) connectés en série comportant des contacts de commutation associés respectifs (113, 116), dans lequel un premier des organes de commutation (111) est directement connecté, pour le commander, au réseau d'alimentation en énergie supérieur (20), et
- dans le réseau d'alimentation en énergie local (30) est présent au moins un dispositif d'alimentation en énergie local (12), comprenant un détecteur de réseau isolé (121) destiné à identifier une situation d'isolation du réseau de distribution d'énergie local (30), un organe de commutation interne (123) destiné à séparer le dispositif d'alimentation en énergie local (12) du réseau de distribution d'énergie local (30), des contacts de commande (122) par l'intermédiaire desquels le second organe de commutation (114) est connecté, pour le commander, au réseau d'alimentation en énergie supérieur (20),
comprenant les étapes consistant à :
- surveiller le réseau de distribution d'énergie local (30) en ce qui concerne la présence d'une situation d'isolation au moyen du détecteur de réseau isolé (121) ;
- ouvrir les contacts de commutation (116) du second organe de commutation (114) par ouverture des contacts de commande (122), et
- séparer le dispositif d'alimentation en énergie local (12) du réseau de distribution d'énergie local (30) au moyen de l'organe de commutation interne (123) afin d'ouvrir les contacts de commutation (113) du premier organe de commutation (111).

9. Procédé de séparation selon la revendication 8, dans lequel
- le réseau d'alimentation en énergie local (30) contient au moins un générateur d'énergie local, notamment un onduleur PV (32) comportant des générateurs PV (33) qui lui sont raccordés, et
- le dispositif d'alimentation en énergie local (12) détermine, par l'intermédiaire de la surveillance de réseau du réseau de distribution d'énergie local (127), une chute de la tension du réseau de distribution d'énergie local (30),
- lorsque la chute de tension n'est pas complète, il attend que tous les générateurs d'énergie locaux aient été séparés du réseau d'alimentation en énergie local (30) ;
- après la chute complète de la tension du réseau d'alimentation en énergie local (30), le dispositif d'alimentation en énergie local (12) interrompt la séparation du réseau de distribution d'énergie local (30) par l'organe de commutation interne (123), et
- établit une alimentation en énergie locale autonome dans le réseau de distribution d'énergie local (30).
